# EUROPÄISCHE PATENTSCHRIFT

(11) **EP 3 250 883 B1**
(45) Veröffentlichungstag und Bekanntmachung des Hinweises auf die Patenterteilung: **08.07.2020**
(21) Anmeldenummer: 15832728.8
(22) Anmeldetag: 28.12.2015
(51) Int. Cl.: G01B 11/27, G06F 3/01, G02B 27/01

(54) **POSITIONIEREN ZWEIER KÖRPER MITTELS EINES AUSRICHTSYSTEMS MIT EINER DATENBRILLE**
POSITIONING OF TWO BODIES BY MEANS OF AN ALIGNMENT SYSTEM WITH A PAIR OF DATA GLASSES
POSITIONNEMENT DE DEUX CORPS AU MOYEN D'UN SYSTÈME D'ALIGNEMENT AVEC DES LUNETTES CONNECTÉES

(30) Priorität: 26.01.2015 DE 102015201290
(43) Veröffentlichungstag der Anmeldung: 06.12.2017
(73) Patentinhaber: Prüftechnik Dieter Busch GmbH, 85737 Ismaning (DE)
(72) Erfinder: HÖLZL, Roland, 81369 München (DE); SCHMIDT, Holger, 85774 Unterföhring (DE)
(86) Internationale Anmeldenummer: PCT/DE2015/200541
(87) Internationale Veröffentlichungsnummer: WO 2016/119769

(56) Entgegenhaltungen:
- EP-A1- 2 093 537
- EP-A1- 2 523 061
- WO-A1-00/52541
- DE-U1-202009 017 510

## Beschreibung

Die vorliegende Erfindung betrifft ein Verfahren zum Bringen zweier Körper in vorgegebene Positionen relativ zueinander sowie ein Ausrichtsystem zur Durchführung eines solchen Verfahrens mit wenigstens einer Lichtemissionsvorrichtung zum Emittieren eines Lichtstrahls und wenigstens einer Lichterfassungsvorrichtung, die eine lichtsensitive Fläche aufweist, wobei eine Auftreffposition eines von der Lichtemissionsvorrichtung emittierten Lichtstrahls auf der lichtsensitiven Fläche registrierbar ist.

Auf zahlreichen technischen Gebieten besteht die Notwendigkeit, Körper an vorgegebenen Positionen relativ zueinander möglichst exakt anzuordnen. So kann es notwendig sein, Drehachsen zweier drehbar gelagerter Maschinenteile möglichst genau fluchtend auszurichten. Hierbei werden die Raum- und/oder Winkellagen der beiden Maschinenteile relativ zueinander bestimmt und entsprechend justiert, bis deren Drehachsen miteinander fluchten. Ein hierfür vorgesehenes Ausrichtsystem mit einer Lichtemissionsvorrichtung zum Emittieren eines Lichtstrahls und einer Lichterfassungsvorrichtung, die eine lichtsensitive Fläche aufweist, wobei eine Auftreffposition eines von der Lichtemissionsvorrichtung emittierten Lichtstrahls auf der lichtsensitiven Fläche registrierbar ist, ist beispielsweise aus der DE 20 2009 017 510 U1 bekannt.

Ferner ist aus der WO 01/35178 A1 ein System mit einer Datenbrille bekannt, mit der sich eine konkrete Arbeitssituation einer zu wartenden Anlage erfassen lässt. Auf Basis der erfassten Arbeitssituation kann von einer über eine bidirektionale Datenverbindung mit der Datenbrille verbundenen Vorrichtung eine Auswahl von Daten über die gewartete Anlage getroffen werden. Diese Daten können einem Benutzer der Datenbrille angezeigt werden, wobei im Sichtfeld des Benutzers die reale Arbeitssituation um die ermittelten Daten oder Informationen erweitert wird. Ein ähnliches System ist auch in der WO 00/52537 A1 offenbart.

In der EP 2 093 537 A1 ist die Ermittlung einer Ausrichtung von zwei drehbar gelagerten Maschinenteilen, einer Ausrichtung von zwei hohlzylinderförmigen Maschinenteilen sowie die Prüfung einer Komponente auf Geradheit entlang einer Längsachse offenbart. Hierfür werden eine erste Messeinheit mit einer Lichtquelle zur Aussendung eines in einer Ebene aufgeweiteten Lichtstrahls und eine zweite Messeinheit mit einer optischen Detektoreinheit verwendet, welche aus zwei parallel zueinander angeordneten Zeilensensoren besteht.

Die WO 00/52541 A1 betrifft ein System und ein Verfahren zur situationsgerechten Unterstützung der Interaktion mit Hilfe von Augmented-Reality-Technologien. Für eine optimierte Unterstützung insbesondere beim Systemaufbau, bei der Inbetriebnahme bis hin zur Wartung von automatisierungstechnisch gesteuerten Systemen und Prozessen wird eine konkrete Arbeitssituation automatisch erfasst und analysiert. Aus statistischen Informationen werden ferner automatisch für die analysierte Arbeitssituation relevante Informationsdaten ausgewählt und angezeigt.

In der WO 03/050626 A1 ist die Verwendung eines entsprechenden Systems zur Erstellung einer Dokumentation von Arbeitsvorgängen für die Darstellung in einem Augmented-Reality-System offenbart. Das System weist insbesondere Trackingmittel zur Bestimmung von Position und Ausrichtung einer Kamera relativ zu Punkten im Raum sowie einen mobilen Rechner zur Verarbeitung der von der Kamera aufgenommenen Bildinformationen und der Position und Ausrichtung der Kamera und zur Weitergabe der verarbeiteten Bildinformationen als Bilddaten und der Position und Ausrichtung der Kamera als Trackinginformation an ein entferntes Rechnersystem auf. Auch die WO 00/58799 A1 offenbart ein vergleichbares System zur Dokumentationsverarbeitung insbesondere für technische und industrielle Anwendungen.

Hingegen offenbart die EP 2 523 061 A1 ein Überwachungssystem mit einer Datenbrille, das für die Überwachung von Maschinen vorgesehen ist. Die Datenbrille verfügt über einen Sensor zum Erfassen der Anwesenheit einer Anlage innerhalb einer vorgegebenen Distanz zur Datenbrille.

Die DE 199 42 586 A1 betrifft ein Verfahren und eine Anordnung zur Vorbereitung eines Crash-Versuches mit einem Kraftfahrzeug, für den einzelne Teile einer Versuchspuppe in einem Kraftfahrzeug innerhalb des Fahrgastraums an festgelegten Referenzorten positioniert werden. In einer frei bewegbaren Datensichtbrille für eine Versuchs-Vorbereitungsperson wird die Soll-Position der Versuchspuppe in das Gesichtsfeld der Versuchs-Vorbereitungsperson eingespiegelt, wobei die aktuelle Position der Datensichtbrille relativ zum Kraftfahrzeug durch eine Messung bestimmt wird.

Vor diesem Hintergrund ist es die Aufgabe der vorliegenden Erfindung, ein Verfahren sowie ein Ausrichtsystem zu schaffen, mit denen zwei Körper schnell, exakt und bequem in vorgegebene Positionen relativ zueinander gebracht werden können.

Diese Aufgabe wird durch das Verfahren mit den Merkmalen des Anspruchs 1 und durch das Ausrichtsystem mit den Merkmalen des Anspruchs 11 gelöst. Bevorzugte Ausführungsformen sind Gegenstand der abhängigen Ansprüche.

Mit dem Gegenstand der vorliegenden Anmeldung wird der Vorgang des Bringens zweier Körper, bei denen es sich bevorzugt um Maschinen oder Maschinenteile handeln kann, in vorgegebene Positionen relativ zueinander wesentlich vereinfacht. So ist bereits das Ermitteln von Abmessungen der Körper sowie jeweiliger Positionen der Körper relativ zueinander, deren Kenntnis für das Positionieren benötigt wird, da die Messdaten unter deren Einbeziehung bzw. auf deren Grundlage verarbeitet werden, gegenüber herkömmlichen Verfahren dadurch vereinfacht, dass diese Daten anhand von Bildern, die mit dem Bilderfassungsmittel der Datenbrille von den Körpern erfasst oder aufgenommen werden, bestimmt werden können, anstatt diese Daten wie bei bekannten Verfahren durch konkretes Vermessen der Körper zu ermitteln und die dadurch erhaltenen Messwerte oder aus einer Datenbank oder Tabelle ausgelesenen Werte umständlich in ein Handgerät oder einen Ausrichtcomputer einzugeben. Überhaupt erlaubt es die Erfindung, auf ein derartiges Handgerät oder Ausrichtcomputer vollständig zu verzichten, da die Messdaten, die registrierten Auftreffpositionen des von der Lichtemissionsvorrichtung emittierten Lichtstrahles auf der lichtsensitiven Fläche der Lichterfassungsvorrichtung entsprechen, direkt an die Datenbrille übermittelt, dort von deren Datenverarbeitungsmittel, das wenigstens einen Prozessor aufweisen kann bzw. bei dem es sich um einen Miniaturcomputer oder Minicomputer handeln kann, verarbeitet und daraus erzeugte Justierungswerte am Anzeigemittel der Datenbrille angezeigt werden. Da ein übliches Handgerät oder Ausrichtcomputer für gewöhnlich ungefähr 1 kg wiegt und während des Ausrichtvorganges abwechselnd bedient und dabei in der Hand gehalten sowie zum Justieren immer wieder abgelegt und neu aufgenommen werden muss, so dass ein Benutzer, wie zum Beispiel eine Wartungsperson, leicht den Blick auf ein Display des Gerätes verliert, welches für den momentanen Arbeitsvorgang wichtige Informationen anzeigen kann, trägt ein Positionierungsverfahren, das ohne ein Handgerät oder einen Ausrichtcomputer durchführbar ist, erheblich zur Vereinfachung des Positionierungsvorganges bei. Insbesondere während der Vornahme der eigentlichen Positionsänderungen der Maschinen ist es beim Justieren wichtig, dass die hierfür notwendigen Informationen zugänglich bzw. einsehbar sind. Deren Anzeigen im Anzeigemittel der Datenbrille wie bei der vorliegenden Erfindung bringt gegenüber einem Anzeigen in einem Display eines Handgerätes oder Ausrichtcomputers den Vorteil mit sich, dass diese Informationen stets sichtbar sind, wodurch das Positionieren auf bequeme und effektive Weise durchgeführt werden kann. Dabei können auf optischem Wege über das Anzeigemittel oder, sofern das Ausrichtsystem und insbesondere die Datenbrille über Lautsprecher verfügt, auf akustischem Wege Hinweise, Warnungen und Alarme an die Wartungsperson ausgegeben werden. Rückmeldungen der Wartungsperson können dabei auf beliebige Weise, beispielsweise per Sprache, Berührung oder Touch, Lidschlag sowie Augen- oder Kopfbewegungen erfolgen.

Dabei ist die vorliegende Erfindung nicht auf solche Verfahren und Ausrichtsysteme beschränkt, bei denen die Lichtemissionsvorrichtung auf einem ersten der Körper angeordnet ist und die Lichterfassungsvorrichtung auf dem jeweiligen zweiten der Körper. Vielmehr umfasst die Erfindung auch solche Verfahren und Ausrichtsysteme, bei denen sich sowohl die Lichtemissionsvorrichtung als auch die Lichterfassungsvorrichtung auf demselben Körper befinden, d.h. bei denen Lichtemissionsvorrichtung und Lichterfassungsvorrichtung auf demselben Körper angeordnet werden, oder bei denen auf beiden Körpern sowohl wenigstens eine Lichtemissionsvorrichtung als auch wenigstens eine Lichterfassungsvorrichtung angeordnet werden. Die Lichtemissionsvorrichtung und die Lichterfassungsvorrichtung können insbesondere in einem einzigen Modul integriert sein. In Fällen, in denen sowohl die Lichtemissionsvorrichtung als auch die Lichterfassungsvorrichtung auf einem ersten der Körper angeordnet sind, kann das Ausrichtsystem zudem wenigstens eine Einrichtung aufweisen, die auf dem jeweiligen zweiten Körper angeordnet wird und dafür sorgt, dass von der Lichtemissionsvorrichtung in Richtung des zweiten Körpers emittiertes Licht wieder zurück in Richtung des ersten Körpers umgelenkt und auf die lichtsensitive Fläche der dort angeordneten Lichterfassungsvorrichtung trifft. Diese Einrichtung kann beispielsweise einen Reflektor, wie zum Beispiel einen Spiegel, oder ein anderes optisches Mittel wie Linsen oder Prismen oder ein optisches System mit mehreren optischen Mitteln umfassen. Ganz allgemein können bedarfsweise je nach Ausführung des Ausrichtsystems bzw. der Lichtemissionsvorrichtung und der Lichterfassungsvorrichtung beliebige optische Mittel wie Reflektoren, Spiegel, Linsen oder Prismen an jedem der Körper vorgesehen sein, und zwar sowohl auf beiden Körpern als auch nur auf einem einzigen der beiden Körper.

Erforderlichenfalls kann die Datenbrille weitere Einrichtungen aufweisen wie zum Beispiel einen Beschleunigungssensor, insbesondere einen 9-Achssensor, ein Gyroskop, einen Kompass, ein Inklinometer, ein Touchpad, einen Knochenleitungslautsprecher oder einen USB-Anschluss (Universal Serial Bus). Eine Stromquelle in Form einer Batterie oder eines Akkumulators kann am Ende eines Bügels der Brille als Gegengewicht zum Bilderfassungsmittel und dem Anzeigemittel angeordnet sein. Für den Fall, dass eine Energiequelle der Datenbrille wie zum Beispiel eine Batterie oder ein Akkumulator eine unzureichende Kapazität aufweist, kann ein Zusatzgerät mit zusätzlichen Funkschnittstellen vorgesehen sein, das zum Beispiel am Gürtel der Wartungsperson tragbar und über ein Kabel mit der Datenbrille verbunden sein kann.

Zum Übermitteln der Messdaten an die Datenbrille kann entweder eine Kabelverbindung oder eine drahtlose Verbindung bzw. Datenübertragungsverbindung bzw. Kommunikationsverbindung zwischen der Datenbrille und der Lichtemissionsvorrichtung und/oder der Lichterfassungsvorrichtung vorgesehen sein, wobei eine drahtlose Verbindung für die Datenübertragung bevorzugt wird. Mithin kann die Datenübertragungsverbindung zwischen der Datenbrille und der Lichterfassungsvorrichtung direkt oder indirekt, zum Beispiel mit einem Umweg über die Lichtemissionsvorrichtung, ausgebildet sein. Insbesondere kann die drahtlose Datenübertragung mittels einer WLAN- (Wireless Local Area Network) oder einer Bluetooth-Verbindung erfolgen. Sofern ein drahtloses Netzwerk mit geringem Datenaufkommen vorliegt, kann die Datenübertragung gemäß einer als ZigBee bezeichneten Spezifikation erfolgen. Bei einigen Ausführungsbeispielen ist eine Steuerung der Lichtemissionsvorrichtung und/oder der Lichterfassungsvorrichtung durch die Datenbrille vorgesehen, die zu diesem Zweck nicht nur mit der Lichterfassungsvorrichtung sondern auch mit der Lichtemissionsvorrichtung verbunden, und insbesondere kommunikativ verbunden, sein kann.

Ferner kann das Bilderfassungsmittel, bei dem es sich im einfachsten Fall um eine Foto- oder Filmkamera, und insbesondere um eine digitale Kamera handeln kann, in Blickrichtung eines Trägers der Datenbrille eines oder mehrere Bilder dadurch erfassen, dass es sie aufzeichnet bzw. aufnimmt, so dass die aufgezeichneten bzw. aufgenommenen Bilder in einem Datenspeicher der Datenbrille oder in einem externen Speicher abgelegt werden können. So können für Protokoll- oder Dokumentationszwecke mit dem Bilderfassungsmittel Bilder von zum Beispiel defekten Teilen von Maschinen erfasst bzw. aufgenommen bzw. aufgezeichnet werden. Vorteilhaft kann ein Winkel zwischen dem Bilderfassungsmittel und einem Gestell der Datenbrille zur Vergrößerung des Aufnahmebereiches des Bilderfassungsmittels verstellbar sein.

Bei dem Anzeigemittel kann es sich um ein sogenanntes Head-up-Display (HUD; wörtlich: "Kopf-oben-Anzeige") handeln, also um ein Anzeigesystem, bei dem der Träger der Datenbrille seine Kopfhaltung oder Blickrichtung beibehalten kann, weil Informationen in sein Sichtfeld projiziert werden. Diese Informationen können mit vom Bilderfassungsmittel erfassten Bildern kombiniert werden. Zumeist weist das Anzeigemittel einen internen Projektor und ein Prisma auf. Abgesehen von Daten und Informationen wie Zahlenwerten, Zeichnungen, Plänen, Graphiken, Diagrammen, Filmen, Bildern, oder Texten, die für das Positionieren der Körper erforderlich sind, können im Anzeigemittel auch andere für die weitere Instandhaltung relevante Informationen nach Art einer erweiterten Realität (Augmented Reality AR) im Anzeigemittel angezeigt werden. Zum Beispiel kann eine Wartungsperson durch Anzeigen entsprechender Informationen im Anzeigemittel, welche durchzuführende Arbeitsschritte betreffen, beim Einlesen eines Ölstandes von Maschinen geführt werden. Bei einer vorteilhaften Ausführungsform der Erfindung können ferner bei auftretenden Problemen mit Hilfe des Anzeigemittels per Videokonferenz Experten hinzugezogen werden. Diese Experten können mittels des Bilderfassungsmittels die Situation direkt vor Ort begutachten, wobei sie den Träger der Datenbrille gegebenenfalls instruieren können, wo er hinzugehen und hinzuschauen hat. Somit kann der Experte eine Wartungsperson direkt beraten.

Das Einlesen des Ölstandes kann beispielsweise auch mit Hilfe des Bilderfassungsmittels erfolgen, wobei mit dem Bilderfassungsmittel ein Bild von einem Schauglas erfasst wird, welches vom Datenverarbeitungsmittel der Datenbrille zur Bestimmung oder Errechnung einer Höhe des Ölstands zugrunde gelegt wird. Der bestimmte Höhenwert kann zu Dokumentationszwecken in einer Datenbank abgelegt werden.

Bei einer bevorzugten Ausführungsform des erfindungsgemäßen Verfahrens handelt es sich bei den Körpern um drehbar gelagerte Maschinenteile zweier Maschinen, die jeweilige Drehachsen aufweisen, wobei bei dem Verfahren die Maschinenteile in solche vorgegebene Positionen relativ zueinander gebracht werden, in denen die Drehachsen miteinander fluchtend ausgerichtet sind, wobei die Maschinenteile synchron gedreht werden und der Lichtstrahl wenigstens während eines Teils der Drehung auf der lichtsensitiven Fläche auftrifft. Mit dieser Ausführungsform wird der Vorgang des Ausrichtens von Drehachsen, die in der Regel mit Längsachsen identisch sind, drehbar gelagerter Maschinenteile, wie zum Beispiel Achsen, Walzen oder Wellen, zweier Maschinen wesentlich vereinfacht.

Bei einer anderen bevorzugten Ausführungsform des erfindungsgemäßen Verfahrens handelt es sich bei den Körpern um Maschinen, wobei zumindest die Schritte d) bis g) während eines Betriebs der Maschinen ausgeführt werden. Diese Ausführungsform erlaubt es insbesondere, die relativen Positionen zweier Maschinen während deren Betrieb permanent und in Echtzeit zu überwachen, da sich diese Positionen infolge von Vibrationen im Laufe der Zeit ändern können. Gegebenenfalls kann der Betrieb der Maschinen zur Korrektur der relativen Positionen der Maschinen unterbrochen werden, sofern der Justierungswert einen vorgegebenen Grenzwert übersteigt.

Das Bestimmen von Abmessungen der Körper und/oder jeweiliger Positionen der Körper relativ zueinander kann auf unterschiedliche Weise erfolgen. So ist es beispielsweise möglich, dass vor dem Erfassen wenigstens eines Bildes wenigstens ein Referenzmaßstab an einem der Körper oder den Körpern benachbart angeordnet wird, der in dem wenigstens einen erfassten Bild erscheint, wobei die Abmessungen der Körper und/oder die jeweiligen Positionen der Körper relativ zueinander durch einen Vergleich von Abmessungen im Bild mit dem im Bild erscheinenden Referenzmaßstab bestimmt werden. Sofern es beispielsweise aus Platzgründen schwierig oder nicht möglich ist, die zur Bestimmung der Abmessungen und Positionen erforderlichen Bilder von den Körpern zu erfassen, so kann alternativ vorgesehen sein, von einer vorgegebenen räumlichen Position aus mit dem Bilderfassungsmittel wenigstens zwei Referenzpunkte an den Körpern zu erfassen, von einem Raumwinkelmessmittel der Datenbrille jeweilige Winkel zwischen einer Referenzlinie und jeweiligen Verbindungslinien, welche die jeweiligen Referenzpunkte mit der vorgegebenen räumlichen Position verbinden, zu messen, und die gemessenen Winkel zum Bestimmen der Abmessungen der Körper und/oder der jeweiligen Positionen der Körper relativ zueinander zu verwenden. Hierfür kann die Datenbrille wenigstens ein oder mehrere Raumwinkelmessmittel wie zum Beispiel Inklinometer aufweisen. Insbesondere kann die Inklination mit Beschleunigungssensoren bestimmt werden und für die Erfassung eines Azimutwinkels kann ein Gyroskop oder Kompass vorgesehen sein. Alle diese Sensoren können in der Datenbrille vorgesehen sein. Alternativ können diese Sensoren auch in einem Smartphone angeordnet sein.

Bei einer bevorzugten Ausführungsform wird vom Bilderfassungsmittel ein Bild wenigstens einer an einem der Körper angebrachten Kennzeichnung erfasst und es wird auf Grundlage dieser Kennzeichnung von der Datenbrille auf gespeicherte Daten zugegriffen. Bei den gespeicherten Daten kann es sich beispielsweise um Abmessungen der Körper bzw. Maschinen und/oder Maschinenteile handeln. Ganz allgemein kann es sich bei der Kennzeichnung um ein beliebiges Zeichen oder einen Code handeln, wie zum Beispiel einen zweidimensionalen Code in der Art eines Strichcodes bzw. Barcodes oder einen QR-Code (Quick Response). Derartige Kennzeichen können, sofern es sich bei den Körpern um Maschinen handelt, beispielsweise an einem Fuß oder mehreren Füßen einer oder beider Maschinen oder an Maschinenteilen angebracht sein. Nach Identifizierung und Zuordnung dieser Kennzeichnung durch die Datenbrille können einer Wartungsperson im Anzeigemittel der Datenbrille genau die Informationen zur Verfügung gestellt werden, die sie zum Ausrichten der Maschine an diesem Fuß benötigt. Die gespeicherten Daten können dabei entweder in einem internen Speicher der Datenbrille oder in einem externen Speicher außerhalb der Datenbrille abgelegt sein. Im letzteren Fall kann die Datenbrille vorteilhaft zu einer kabelgebundenen oder einer drahtlosen Datenübertragungs- oder Kommunikationsverbindung mit wenigstens einem externen Gerät eingerichtet sein. Insbesondere kann die Datenbrille über wenigstens eine Schnittstelle verfügen, über die eine Verbindung zu einem lokalen Netzwerk und/oder zum Internet herstellbar ist. Beispielsweise können mittels einer derartigen Schnittstelle Daten von in den Körpern oder Maschinen verbauten Sensoren, wie zum Beispiel Schwingungssensoren, abgerufen und bedarfsweise in der Datenbrille selber gespeichert oder an einen externen Speicher weitergeleitet werden. Darüber hinaus kann über eine derartige Schnittstelle auf einen in einer externen Instandhalterdatenbank abgelegten Auftrag zur Wartung der beiden Körper oder Maschinen zugegriffen werden, der anhand der erfassten Kennzeichnung identifiziert wird. Gerade durch das Internet ist es möglich, kontext-basiert relevante Informationen bereitzustellen.

Vorteilhafterweise werden beim Anordnen der Lichtemissionsvorrichtung und der Lichterfassungsvorrichtung im Anzeigemittel Positionen angezeigt, an denen die Lichtemissionsvorrichtung und die Lichterfassungsvorrichtung anzuordnen sind. Beispielsweise können einem Anwender diese Positionen unter Verwendung von Pseudo-3D-Bildern angezeigt werden, die bis hin zur sogenannten Augmented Reality oder virtuellen Realität animiert sein können. Hierdurch wird dem Anwender das Vorbereiten der Ausrichtung erleichtert, da er die Lichtemissionsvorrichtung und die Lichterfassungsvorrichtung unmittelbar korrekt positionieren kann, ohne sich umständlich um Informationen über deren korrekte Positionen bemühen zu müssen .

Ferner ist es von Vorteil, wenn auf der Grundlage eines oder mehrerer der erfassten Bilder geprüft wird, ob die Lichtemissionsvorrichtung und die Lichterfassungsvorrichtung auf eine vorgegebene Weise angeordnet sind, wobei ein Ergebnis dieser Prüfung im Anzeigemittel angezeigt wird. Dies erlaubt es, eventuelle fehlerhafte Positionierungen der Lichtemissionsvorrichtung und der Lichterfassungsvorrichtung rasch zu beheben. Zu diesem Zweck können die Lichtemissionsvorrichtung und die Lichterfassungsvorrichtung beispielsweise mit unterschiedlichen Farben, Symbolen oder Zeichen versehen sein.

Voreilhafterweise werden Justierwerte für Drehachsen von drehbar gelagerten Maschinenteilen zweier Maschinen im Anzeigemittel grafisch auf eine Weise dargestellt, in der sie die beiden Maschinen überlagern, um dadurch die Ansicht der Maschinen zu erweitern. Dabei werden der translatorische sowie der rotatorische Versatz überzeichnet dargestellt, um dem Anwender die Vorzeichen der jeweiligen Werte zu veranschaulichen.

In der Praxis sind in Aufträgen zur Wartung von Maschinen bzw. zum Ausrichten ihrer Maschinenteile häufig die Standorte der betreffenden Maschinen verzeichnet. Um Wartungspersonen die Auffindung der zu wartenden Maschinen zu erleichtern, ist in einer bevorzugten Ausführungsform der Erfindung vorgesehen, dass im Anzeigemittel Informationen über einen Standort der Körper und/oder eine zu den Körpern hinführende Richtungsanzeige angezeigt werden. Beispielsweise kann das Anzeigemittel einen Fabrikplan anzeigen, in dem die momentanen Standorte der Wartungsperson und der zu wartenden Maschinen markiert sind. Des Weiteren kann im Anzeigemittel ein Pfeil als Richtungsanzeige angezeigt werden, welcher der Wartungsperson angibt, in welche Richtung sie zu gehen hat, um auf kürzestem oder schnellstem Weg zu den zu wartenden Maschinen zu gelangen. In diesem Zusammenhang kann die Datenbrille vorteilhaft eine Schnittstelle aufweisen, mit der eine Verbindung zu einem Navigationssystem herstellbar ist, bei dem es sich beispielsweise um das GPS-System (Global Position System) oder ein System zur Indoor-Navigation handeln kann.

Bei einer bevorzugten Ausführung wird im Anzeigemittel ein Ablaufplan des Verfahrens angezeigt. Beispielsweise kann ähnlich wie bei einem bekannten Ausrichtcomputer ein entsprechendes Flussdiagramm bzw. ein Workflow zum Ausrichtvorgang ablaufen, dem die Wartungsperson die jeweils nächsten von ihr vorzunehmenden Arbeitsschritte entnehmen kann.

Nachfolgend wird die Erfindung anhand eines einfachen Ausführungsbeispiels näher erläutert. Es zeigen:
- Figur 1a): zwei Maschinen mit drehbaren Maschinenteilen, wobei eine Lichtemissionsvorrichtung und eine Lichterfassungsvorrichtung eines Ausrichtsystems auf den Maschinenteilen aufgesetzt sind;
- Figur 1b): eine Datenbrille des Ausrichtsystems;
- Figur 2: eine Person mit aufgesetzter Datenbrille, die ein Inklinometer aufweist;
- Figur 3: Referenzlinien zum Bestimmen von Abmessungen der Maschinen mittels der Datenbrille.

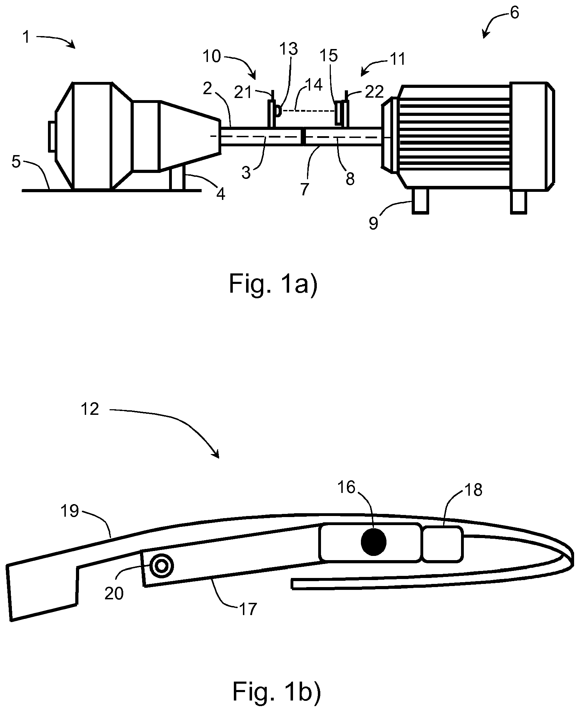

In der Figur 1a) ist eine Maschine (1) mit einem länglichen Maschinenteil (2) runden Querschnitts dargestellt, das um dessen horizontal ausgerichtete Längsachse drehbar gelagert ist, so dass die Längsachse des Maschinenteils (2) zugleich dessen Drehachse (3) bildet. Die Maschine (1) weist ferner Standbeine (4) auf, mit denen sie wie vorliegend dargestellt auf einem Podest (5) abgestellt ist oder aber auch auf einer anderen geeigneten Unterlage, wie zum Beispiel auf dem Boden, abgestellt sein kann. Eine weitere Maschine (6), die ebenfalls ein längliches, horizontal ausgerichtetes Maschinenteil (7) runden Querschnitts aufweist, wobei die Längsachse des Maschinenteils (7) zugleich dessen Drehachse (8) bildet, ist der Maschine (1) derart benachbart angeordnet, dass die beiden Maschinenteile (2) und (7) mit ihren Stirnflächen einander zugewandt sind. In der Praxis ist für gewöhnlich eine Kupplungseinrichtung zwischen den Maschinenteilen (2) und (7) vorgesehen, die in der Figur 1a) jedoch aus Gründen der Anschaulichkeit nicht eingezeichnet ist. Ähnlich der Maschine (1) weist auch die Maschine (6) Standbeine (9) auf, mit denen sie auf einem geeigneten Untergrund, zum Beispiel wie die Maschine (1) einem Podest (5), oder wie in der Figur 1a) dargestellt auf dem Boden abgestellt ist.

Für den Betrieb der beiden Maschinen (1) und (6) ist es erforderlich, dass die Drehachsen (3) und (8) ihrer jeweiligen Maschinenteile (2) und (7) möglichst genau ausgerichtet sind und miteinander fluchten. Um die Drehachsen (3) und (8) der beiden drehbaren Maschinenteile (2) und (7) der Maschinen (1) und (6) fluchtend auszurichten, ist ein Ausrichtsystem vorgesehen, das im vorliegenden Fall eine Lichtemissionsvorrichtung (10), eine Lichterfassungsvorrichtung (11) sowie eine Datenbrille (12) umfasst, die in der Figur 1b) näher dargestellt ist.

Die Lichtemissionsvorrichtung (10) weist einen Laser (13) auf, der Licht bzw. Laserlicht in Form eines Laserstrahls (14) erzeugt. Entsprechend weist die Lichterfassungsvorrichtung (11) einen Lichtsensor mit einer lichtsensitiven Fläche (15) zum Erfassen des von der Lichtemissionsvorrichtung (10) erzeugten Laserstrahls (14) auf. Die lichtsensitive Fläche (15) ist insbesondere dazu eingerichtet, Auftreffpositionen des Laserstrahls (14) auf der lichtsensitiven Fläche (15) zu registrieren.

Wie bekannte Datenbrillen auch weist die Datenbrille (12) des Ausrichtsystems eine Kamera (16) als Bilderfassungsmittel, einen Prozessor (17) als Datenverarbeitungsmittel und ein Head-up-Display oder HUD (18) als Anzeigemittel auf. Dabei ist das HUD (18) derart angeordnet, dass es vor einem Auge eines Trägers der Datenbrille (12) positioniert ist. Neben dem HUD (18) zum Ohr des Trägers der Datenbrille (12) hin ist die Kamera (16) angeordnet, während sich der Prozessor (17) im daran anschließenden Bügel (19) befindet. Ferner ist eine Schnittstelle (20) zur drahtlosen Kommunikation vorgesehen, über die die Datenbrille (12) mit der Lichtemissionsvorrichtung (10) kommunizieren kann, die über eine entsprechende Schnittstelle (21) verfügt. Darüber hinaus kann die Datenbrille (12) auch mit der Lichterfassungsvorrichtung (11) kommunizieren, die zu diesem Zweck ebenfalls über eine entsprechende Schnittstelle (22) verfügt.

Um nun die Drehachsen (3) und (8) der Maschinenteile (2) und (7) fluchtend auszurichten, werden zunächst die Lichtemissionsvorrichtung (10) und die Lichterfassungsvorrichtung (11) auf den Maschinenteilen (2) und (7) angeordnet und darauf fixiert. Die jeweiligen Positionen, an denen die Lichtemissionsvorrichtung (10) und die Lichterfassungsvorrichtung (11) auf den Maschinenteilen (2) und (7) anzuordnen sind, werden hierzu im HUD (18) angezeigt, damit eine die Datenbrille (12) tragende Wartungsperson fehlerfrei und ohne großen Zeitaufwand die Anordnung der Lichtemissionsvorrichtung (10) und der Lichterfassungsvorrichtung (11) vornehmen kann. Dabei ist die Lichtemissionsvorrichtung (10) so auf dem Maschinenteil (2) angeordnet, dass ein von ihr erzeugter Laserstrahl (14) im Wesentlichen parallel zur Drehachse (3) des Maschinenteils (2) der Maschine (1) in Richtung auf die Maschine (6) emittiert wird. Entsprechend ist die Lichterfassungsvorrichtung (11) derart auf dem Maschinenteil (7) der Maschine (6) angeordnet, dass deren lichtsensitive Fläche (15) dem Laser (13) zugewandt und ein vom Laser (13) emittierter Laserstrahl (14) auf die lichtsensitive Fläche (15) auftrifft. Zur Überprüfung, ob die Lichtemissionsvorrichtung (10) und die Lichterfassungsvorrichtung (11) korrekt auf den Maschinenteilen (2) und (7) fixiert worden sind, kann mittels der Kamera (16) ein Bild von der Lichtemissionsvorrichtung (10), der Lichterfassungsvorrichtung (11) und den Maschinenteilen (2) und (7) aufgenommen und vom Prozessor (17) ausgewertet werden. Das Ergebnis dieser Auswertung wird der Wartungsperson im HUD (18) angezeigt, so dass sie die Anordnung der Lichtemissionsvorrichtung (10) und der Lichterfassungsvorrichtung (11) gegebenenfalls umgehend korrigieren kann.

Obwohl im vorliegenden Ausführungsbeispiel eines Ausrichtsystems die Lichtemissionsvorrichtung (10) auf dem Maschinenteil (2) der Maschine (1) angeordnet ist und die Lichterfassungsvorrichtung (11) auf dem Maschinenteil (7) der Maschine (6), ist es bei anderen Ausführungsformen des Ausrichtsystems auch möglich, sowohl die Lichtemissionsvorrichtung (10) als auch die Lichterfassungsvorrichtung (11) auf demselben Maschinenteil (2) oder (7) derselben Maschine (1) oder (6) anzuordnen. Um zu gewährleisten, dass vom Laser (13) emittierte Laserstrahlen (14) auch bei derartigen Ausführungsformen des Ausrichtsystems auf die lichtsensitive Fläche (15) der Lichterfassungsvorrichtung (11) treffen, sind optische Mittel wie zum Beispiel Spiegel, Linsen oder Prismen vorgesehen, die zumindest zum Teil auf demjenigen Maschinenteil (2) oder (7) angeordnet sind, auf dem sich die Lichtemissionsvorrichtung (10) und die Lichterfassungsvorrichtung (11) nicht befinden.

Nach Anordnen der Lichtemissionsvorrichtung (10) und der Lichterfassungsvorrichtung (11) auf den Maschinenteilen (2) und (7), wird mittels der Kamera (16) der Datenbrille (12) wenigstens ein Bild der Maschinen (1) und (6), Maschinenteile (2) und (7) oder der Lichtemissionsvorrichtung (10) und der Lichterfassungsvorrichtung (11) erfasst, oder es wird wenigstens ein Bild der gesamten Anordnung bestehend aus den Maschinen (1) und (6) und der Lichtemissionsvorrichtung (10) und der Lichterfassungsvorrichtung (11) des Ausrichtsystems erfasst. Auf der Grundlage dieses Bildes oder dieser Bilder werden dann vom Prozessor (17) der Datenbrille (12) für den Ausrichtvorgang relevante Abmessungen der Maschinen (1) und (6) und der Maschinenteile (2) und (7) bestimmt bzw. ermittelt sowie deren jeweilige Positionen relativ zueinander. Hierfür gibt es unterschiedliche Möglichkeiten, von denen drei bevorzugte Verfahren weiter unten näher beschrieben werden.

Sobald die notwendigen Informationen über Abmessungen und Positionen der Maschinen (1) und (6) und der Maschinenteile (2) und (7) vorliegen, wird der Laser (13) vom Prozessor (17) auf drahtlosem Wege über die Schnittstelle (20) der Datenbrille (12) und die Schnittstelle (21) der Lichtemissionsvorrichtung (10) zum Emittieren eines Laserstrahls (14) veranlasst. Dessen Auftreffposition auf der lichtsensitiven Fläche (15) der Lichterfassungsvorrichtung (11) wird von der Lichterfassungsvorrichtung (11) registriert. Nun werden beide Maschinenteile (2) und (7) synchron gedreht, wobei sich die Lichtemissionsvorrichtung (10) und die Lichterfassungsvorrichtung (11), die auf den Maschinenteilen (2) und (7) fixiert sind, mitdrehen. Dabei erfolgt die Drehung der Maschinenteile (2) und (7) derart, dass der Laserstrahl (14) während der gesamten Drehung stets auf die lichtsensitive Fläche (15) auftrifft, bzw. dass die Maschinenteile (2) und (7) in einer Blickrichtung entlang der Drehachsen (3) und (8) denselben Drehsinn oder dieselbe Drehrichtung haben. Vorzugsweise werden die Maschinenteile (2) und (7) hierbei einmal um 360° gedreht, in manchen Fällen kann jedoch auch eine Drehung von weniger als 360° ausreichend sein. Sofern die Drehachsen (3) und (8) nicht miteinander fluchten, wird sich die Auftreffposition des Laserstrahls (14) auf der lichtsensitiven Fläche (15) ändern und eine ellipsoide Bahn beschreiben, aus der sich des Ausmaß der Abweichung der Drehachsen (3) und (8) von der ideal ausgerichteten Anordnung bestimmen lässt. Während der gesamten Drehung werden nun von der Lichterfassungsvorrichtung (11) die Auftreffpositionen des Laserstrahls (14) auf der lichtsensitiven Fläche (15) registriert und Messdaten erzeugt, welche diese registrierten Auftreffpositionen repräsentieren. Diese Messdaten werden von der Lichterfassungsvorrichtung (11) über deren Schnittstelle (22) und die Schnittstelle (20) der Datenbrille (12) drahtlos an den Prozessor (17) der Datenbrille übermittelt, was in Echtzeit oder auch nach Vollendung der Drehung der Maschinenteile (2) und (7) geschehen kann.

Vom Prozessor (17) werden die empfangenen Messdaten verarbeitet. Es wird dabei wenigstens ein Justierungswert erzeugt, der angibt, welche Position welcher der Maschinen wie zu ändern ist, um die beiden Drehachsen (3) und (8) in fluchtende Ausrichtung miteinander zu bringen. Bei diesem Justierungswert kann es sich beispielsweise um einen translatorischen Verschiebungswert in horizontaler oder vertikaler Richtung oder um einen Drehwinkel um eine vorgegebene Achse handeln. Dieser Justierungswert wird nun im HUD (18) angezeigt, so dass eine die Datenbrille (12) tragende Wartungsperson die Positionen einer der Maschinen (1) oder (6) oder beider Maschinen (1) und (6) entsprechend dem oder den Justierungswerten unmittelbar ändern kann. Hierbei werden die beiden Drehachsen (2, 8) grafisch auf eine Weise dargestellt, in der sie die beiden Maschinen (1, 6) überlagern, um dadurch die Ansicht der Maschinen (1, 6) zu erweitern. Dabei werden der translatorische sowie der rotatorische Versatz überzeichnet dargestellt, um dem Anwender die Vorzeichen der jeweiligen Werte zu veranschaulichen. Die Positionsänderung kann zum Beispiel durch Unterlegen geeigneter Unterlegscheiben unter die Maschinen (1) und (6) oder mittels eines hierfür geeigneten Verschiebemechanismus geschehen. Falls erforderlich, kann die Drehung der Maschinenteile (2) und (7) beliebig oft wiederholt werden, um anhand daraus gewonnener Justierungswerte die Positionen der Maschinen (1) und (6) so oft wiederholt zu ändern, bis die Drehachsen (3) und (8) ausreichend miteinander fluchten.

Während der Durchführung des gesamten Verfahrens kann der Wartungsperson im HUD (18) ein Ablaufplan angezeigt werden, um die Wartungsperson zu jeder Zeit über nachfolgend vorzunehmende Arbeitsschritte zu informieren.

Eine Möglichkeit, die Abmessungen der Maschinen (1) und (6) und der Maschinenteile (2) und (7) anhand eines von der Kamera (16) erfassten bzw. aufgenommenen Bildes zu bestimmen besteht darin, einen Referenzmaßstab auf einer der Maschinen (1) und (6) oder den Maschinen (1) und (6) benachbart anzuordnen, so dass dieser Referenzmaßstab im von der Kamera (16) aufgenommenen Bild der Anordnung bestehend aus den Maschinen (1) und (6) und der Lichtemissionsvorrichtung (10) und der Lichterfassungsvorrichtung (11) des Ausrichtsystems erscheint. Dank des im Bild erscheinenden Referenzmaßstabes kann der Prozessor (17) durch einfache Verhältnisbildung reale Längen aus im Bild auftretenden scheinbaren Längen bestimmen.

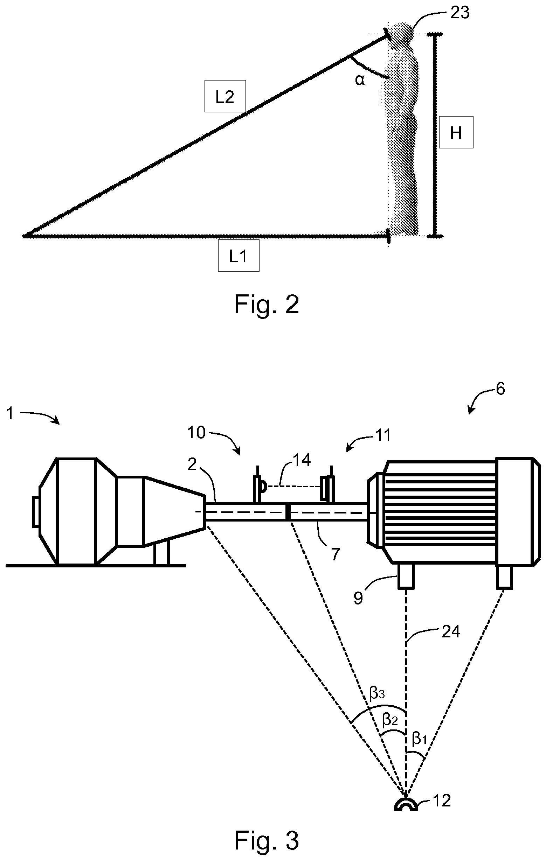

Eine weitere Möglichkeit zur Bestimmung der Abmessungen der Maschinen (1) und (6) und der Maschinenteile (2) und (7) anhand eines von der Kamera (16) erfassten Bildes ist in den Figuren 2 und 3 erläutert. Hierzu ist die Datenbrille (12) mit einem Raumwinkelmessmittel wie zum Beispiel einem Inklinometer ausgestattet. Eine derartige Datenbrille (12) wird in der Figur 2 von einer Person (23) getragen. Hierdurch befindet sich die Datenbrille (12) in einer vorgegebenen Höhe H über dem Boden. Wenn die Person mit Blickrichtung parallel zum Boden geradeaus schaut, wird vom Inklinometer ein rechter Winkel als Neigungswinkel zwischen der Blickrichtung und einer Senkrechten oder Normalen zum Boden gemessen. Sobald die Person wie in der Figur 2 gezeigt einen Punkt auf dem Boden anvisiert bzw. mit der Kamera (16) erfasst, verringert sich der Neigungswinkel α zwischen seiner Blickrichtung und der Senkrechten zum Boden und beträgt nun weniger als 90°. Da die Höhe H und der vom Inklinometer gemessene Neigungswinkel α bekannt sind, ist es dem Prozessor (17) möglich, auf bekannte Weise mittels trigonometrischer Funktionen sowohl die horizontale Entfernung L₁ von der Person zum anvisierten Punkt bzw. erfassten Punkt als auch die Entfernung L₂ von der Datenbrille zu diesem Punkt zu bestimmen. Sofern darüber hinaus auch ein Horizontalwinkel oder Azimutwinkel zum anvisierten Punkt bekannt ist, kann daraus ein Raumvektor mit einer Länge und zwei Raumwinkeln bestimmt werden.

Zur Erfassung des Azimutwinkels ist in der Figur 3 eine beispielhafte Referenzlinie (24) von der Datenbrille (12) zu einem der Standbeine (9) der Maschine (6) eingezeichnet. Ferner sind in der Figur 3 Blickrichtungen zu verschiedenen markanten Punkten der Maschinen (1) und (6) und deren Maschinenteilen (2) und (7) eingezeichnet, die jeweils verschiedene Azimutwinkel β zur Referenzlinie (24) aufweisen. Durch Messung der Azimutwinkel und Neigungswinkel zu bestimmten Punkten lassen sich daher jeweilige Raumvektoren und daraus wiederum Abstände zwischen einzelnen Punkten bestimmen. Zur Bestimmung der Abmessungen der Maschinen (1) und (6) und deren Maschinenteile (2) und (7) genügt es daher, relevante Punkte der Maschinen (1) und (6) und Maschinenteile (2) und (7) mit der Datenbrille (12) anzuvisieren bzw. mit der Kamera (16) zu erfassen, so dass die Datenbrille (12) mittels der Raumwinkelmessmittel die Azimutwinkel und Neigungswinkel für diese Punkte messen und der Prozessor (17) bei bekannter Position der Datenbrille (12) die gesuchten Abmessungen bestimmen kann.

Eine besonders einfache Variante, die Abmessungen der Maschinen (1) und (6) sowie der Maschinenteile (2) und (7) anhand eines mit der Kamera (16) erfassten Bildes zu bestimmen besteht darin, an den Maschinen (1) und (6) jeweilige Kennzeichnungen anzubringen, welche die jeweilige Maschine (1) oder (6) eindeutig kennzeichnen. Wenn der Prozessor (17) ein von der Kamera (16) aufgenommenes Bild auswertet, auf dem eine dieser Kennzeichnungen erscheint, ist er in der Lage, die Kennzeichnung zu erkennen und die zugehörige Maschine (1) oder (6) eindeutig zu identifizieren. Somit kann auf eine Datenbank zugegriffen werden, in der die Abmessungen der betreffenden Maschine (1) oder (6) abgespeichert sind. Diese Datenbank kann sich entweder in einem Speicher der Datenbrille (12) befinden, in einem Zusatzmodul des Ausrichtsystems oder aber in einem externen Speichersystem. Befindet sich die Datenbank in einem Zusatzmodul des Ausrichtsystems, so kann die Datenbrille (12) eine Möglichkeit zur drahtlosen oder kabelgebundenen Datenübertragungs- oder Kommunikationsverbindung zu dieser Datenbank aufweisen, um auf die darauf abgespeicherten Daten zugreifen zu können. Ist die Datenbank in einem externen Speichersystem vorgesehen, dann kann die Datenbrille (12) für den Zugriff auf die Datenbank über eine entsprechende Schnittstelle zu einem Netzwerk verfügen, welches die Datenbrille (12) mit dem Speichersystem verbindet, beispielsweise einem LAN (Local Area Network), einem Intranet oder dem Internet. Für alle diese Zwecke kann insbesondere die oben beschriebenen Schnittstelle (20) eingerichtet sein.

Eine weitere Einsatzmöglichkeit des die Lichtemissionsvorrichtung (10), die Lichterfassungsvorrichtung (11) sowie die Datenbrille (12) umfassenden Ausrichtsystems besteht in der permanenten Überwachung der Positionierung zweier auf vorgegebenen Positionen relativ zueinander angeordneter Maschinen während deren Betrieb. Hierzu wird die Lichtemissionsvorrichtung (10) auf einer der beiden Maschinen angeordnet und die Lichterfassungsvorrichtung (11) auf der jeweiligen anderen der beiden Maschinen, so dass der von der Lichtemissionsvorrichtung (10) emittierte Laserstrahl (14) auf die lichtsensitive Fläche (15) der Lichterfassungsvorrichtung (11) fällt. Sofern sich die Position der beiden Maschinen relativ zueinander infolge von Vibrationen, die während des Maschinenbetriebes auftreten, ändert, dann ändert sich dementsprechend die Auftreffposition des Laserstrahles (14) auf der lichtsensitiven Fläche (15) der Lichterfassungsvorrichtung (11) und folglich auch der auf die beschriebene Weise von der Datenbrille (12) ermittelte Justierungswert. Für den Justierungswert kann ein Grenzwert vorgegeben werden, bei dessen Überschreiten durch den Justierungswert die Abweichung der relativen Positionen der beiden Maschinen von deren vorgegebenen Positionen einen kritischen Wert überschritten hat. In diesem Fall kann entweder im Head-up-Display (18) der Datenbrille (12) oder auf andere Weise, beispielsweise über einen Lautsprecher, ein entsprechendes Signal ausgegeben werden, um dem Benutzer anzuzeigen, dass die Maschinen angehalten und deren Positionen neu justiert werden müssen, wofür der Justierungswert verwendet werden kann. Auf diese Weise ist eine Überwachung der relativen Positionen der Maschinen während deren Betrieb in Echtzeit möglich.

### Bezugszeichenliste

- 1.: Maschine
- 2.: Maschinenteil
- 3.: Drehachse
- 4.: Standbeine
- 5.: Podest
- 6.: Maschine
- 7.: Maschinenteil
- 8.: Drehachse
- 9.: Standbein
- 10.: Lichtemissionsvorrichtung
- 11.: Lichterfassungsvorrichtung
- 12.: Datenbrille
- 13.: Laser
- 14.: Laserstrahl
- 15.: lichtsensitive Fläche
- 16.: Kamera
- 17.: Prozessor
- 18.: Head-up-Display
- 19.: Bügel
- 20.: Schnittstelle der Datenbrille
- 21.: Schnittstelle der Lichtemissionsvorrichtung
- 22.: Schnittstelle der Lichterfassungsvorrichtung
- 23.: Person
- 24.: Referenzlinie

## Patentansprüche

1. Verfahren zum Bringen zweier Körper (1, 2, 6, 7) in vorgegebene Positionen relativ zueinander mit den Schritten:
a) Anordnen auf eine vorgegebene Weise von wenigstens einer Lichtemissionsvorrichtung (10) eines Ausrichtsystems auf einem der Körper (1, 2, 6, 7) und wenigstens einer Lichterfassungsvorrichtung (11) des Ausrichtsystems auf einem der Körper (1, 2, 6, 7);
b) Erfassen wenigstens eines Bildes der Körper (1, 2, 6, 7) mit einem Bilderfassungsmittel (16) einer Datenbrille (12) des Ausrichtsystems;
c) Bestimmen von Abmessungen der Körper (1, 2, 6, 7) und jeweiliger Positionen der Körper (1, 2, 6, 7) relativ zueinander anhand des erfassten Bildes oder mehrerer der erfassten Bilder durch ein Datenverarbeitungsmittel (17) der Datenbrille (12);
d) Registrieren von Auftreffpositionen eines von der Lichtemissionsvorrichtung (10) emittierten Lichtstrahls (14) auf einer lichtsensitiven Fläche (15) der Lichterfassungsvorrichtung (11);
e) Übermitteln von Messdaten, welche die registrierten Auftreffpositionen repräsentieren, an die Datenbrille (12);
f) Verarbeiten der Messdaten durch das Datenverarbeitungsmittel (17) unter Einbeziehung der Abmessungen der Körper (1, 2, 6, 7), der jeweiligen Positionen der Körper (1, 2, 6, 7) relativ zueinander und der registrierten Auftreffpositionen nach Schritt d), wobei wenigstens ein Justierungswert erzeugt wird, der angibt, wie die Positionen der Körper (1, 2, 6, 7) zum Erreichen der vorgegebenen Positionen relativ zueinander zu ändern sind;
g) Anzeigen des Justierungswertes an einem Anzeigemittel (18) der Datenbrille (12);
h) Ändern der Positionen der Körper (1, 2, 6, 7) entsprechend dem Justierungswert.

2. Verfahren nach Anspruch 1, bei dem es sich bei den Körpern (1, 2, 6, 7) um drehbar gelagerte Maschinenteile (2, 7) zweier Maschinen (1, 6) handelt, die jeweilige Drehachsen (3, 8) aufweisen, und bei dem die Maschinenteile (2, 7) in solche vorgegebene Positionen relativ zueinander gebracht werden, in denen die Drehachsen (3, 8) miteinander fluchtend ausgerichtet sind, wobei die Maschinenteile (2, 7) synchron gedreht werden und der Lichtstrahl (14) wenigstens während eines Teils der Drehung auf der lichtsensitiven Fläche (15) auftrifft.

3. Verfahren nach Anspruch 1, bei dem es sich bei den Körpern (1, 2, 6, 7) um Maschinen (1, 6) handelt, wobei zumindest die Schritte d) bis g) während eines Betriebs der Maschinen (1, 6) ausgeführt werden.

4. Verfahren nach einem der vorhergehenden Ansprüche, bei dem vor dem Schritt b) wenigstens ein Referenzmaßstab an einem der Körper (1, 2, 6, 7) oder den Körpern (1, 2, 6, 7) benachbart angeordnet wird, der in dem im Schritt b) erfassten Bild erscheint, wobei im Schritt c) die Abmessungen der Körper (1, 2, 6, 7) und die jeweiligen Positionen der Körper (1, 2, 6, 7) relativ zueinander durch einen Vergleich von Abmessungen im Bild mit dem im Bild erscheinenden Referenzmaßstab bestimmt werden.

5. Verfahren nach einem der Ansprüche 1 bis 3, bei dem im Schritt b) von einer vorgegebenen räumlichen Position aus mit dem Bilderfassungsmittel (16) wenigstens zwei Referenzpunkte an den Körpern (1, 2, 6, 7) erfasst, von einem Raumwinkelmessmittel der Datenbrille (12) jeweilige Winkel zwischen einer Referenzlinie (24) und jeweiligen Verbindungslinien, welche die jeweiligen Referenzpunkte mit der vorgegebenen räumlichen Position verbinden, gemessen werden, und die gemessenen Winkel im Schritt c) zum Bestimmen der Abmessungen der Körper (1, 2, 6, 7) und der jeweiligen Positionen der Körper (1, 2, 6, 7) relativ zueinander verwendet werden.

6. Verfahren nach einem der vorhergehenden Ansprüche, bei dem vom Bilderfassungsmittel (16) ein Bild wenigstens einer an einem der Körper (1, 2, 6, 7) angebrachten Kennzeichnung erfasst und auf Grundlage dieser Kennzeichnung von der Datenbrille (12) auf gespeicherte Daten zugegriffen wird.

7. Verfahren nach einem der vorhergehenden Ansprüche, bei dem im Schritt a) im Anzeigemittel (18) Positionen angezeigt werden, an denen die Lichtemissionsvorrichtung (10) und die Lichterfassungsvorrichtung (11) anzuordnen sind.

8. Verfahren nach einem der vorhergehenden Ansprüche, bei dem auf der Grundlage eines oder mehrerer im Schritt b) erfasster Bilder geprüft wird, ob die Lichtemissionsvorrichtung (10) und die Lichterfassungsvorrichtung (11) auf eine vorgegebene Weise angeordnet sind, wobei ein Ergebnis dieser Prüfung im Anzeigemittel (18) angezeigt wird.

9. Verfahren nach einem der vorhergehenden Ansprüche, bei dem im Anzeigemittel (18) Informationen über einen Standort der Körper (1, 2, 6, 7) und/oder eine zu den Körpern (1, 2, 6, 7) hinführende Richtungsanzeige angezeigt werden.

10. Verfahren nach einem der vorhergehenden Ansprüche, bei dem im Anzeigemittel (18) ein Ablaufplan des Verfahrens angezeigt wird.

11. Ausrichtsystem zum Ausführen des Verfahrens nach einem der Ansprüche 1 bis 10 mit wenigstens einer Lichtemissionsvorrichtung (10) zum Emittieren eines Lichtstrahls (14), wenigstens einer Lichterfassungsvorrichtung (11), die eine lichtsensitive Fläche (15) aufweist, wobei eine Auftreffposition eines von der Lichtemissionsvorrichtung (10) emittierten Lichtstrahls (14) auf der lichtsensitiven Fläche (15) registrierbar ist, und wenigstens einer mittels einer Datenübertragungsverbindung mit der Lichterfassungsvorrichtung (11) verbindbaren Datenbrille (12), die wenigstens ein Datenverarbeitungsmittel (17), wenigstens ein Bilderfassungsmittel (16) und wenigstens ein Anzeigemittel (18) aufweist.

12. Ausrichtsystem nach Anspruch 11, bei dem die Datenbrille (12) ferner wenigstens ein Raumwinkelmessmittel und/oder wenigstens ein Inklinometer und/oder wenigstens eine Schnittstelle (20) aufweist, über die eine Verbindung zu einem lokalen Netzwerk und/oder zum Internet und/oder zu einem Navigationssystem herstellbar ist.

## Claims

1. Method for bringing two bodies (1, 2, 6, 7) into prescribed positions relative to one another, having the steps of:
a) arranging at least one light emission apparatus (10) of an orientation system on one of the bodies (1, 2, 6, 7) and at least one light sensing apparatus (11) of the orientation system on one of the bodies (1, 2, 6, 7)in a prescribed manner;
b) capturing at least one image of the bodies (1, 2, 6, 7) using an image capture means (16) of a pair of data goggles (12) of the orientation system;
c) a data processing means (17) of the data goggles (12) determining dimensions of the bodies (1, 2, 6, 7) and respective positions of the bodies (1, 2, 6, 7) relative to one another on the basis of the captured image or a plurality of the captured images;
d) registering impingement positions for a light beam (14) emitted by the light emission apparatus (10) on a light-sensitive area (15) of the light sensing apparatus (11);
e) transmitting measurement data representing the registered impingement positions to the data goggles (12) ;
f) the data processing means (17) processing the measurement data including the dimensions of the bodies (1,2,6,7), the respective positions of the bodies (1,2,6,7), relative to one another and the registered impingement positions according to step d), wherein at least one adjustment value is produced that indicates how the positions of the bodies (1, 2, 6, 7) need to be changed in order to reach the prescribed positions relative to one another;
g) displaying the adjustment value on a display means (18) of the data goggles (12);
h) changing the positions of the bodies (1, 2, 6, 7) in accordance with the adjustment value.

2. Method according to Claim 1, in which the bodies (1, 2, 6, 7) are rotatably mounted machine parts (2, 7) of two machines (1, 6) that have respective axes of rotation (3, 8), and in which the machine parts (2, 7) are brought into prescribed positions relative to one another in which the axes of rotation (3, 8) are oriented in alignment with one another, wherein the machine parts (2, 7) are rotated synchronously and the light beam (14) impinges on the light-sensitive area (15) at least during part of the rotation.

3. Method according to Claim 1, in which the bodies (1, 2, 6, 7) are machines (1, 6), wherein at least steps d) to g) are carried out during operation of the machines (1, 6) .

4. Method according to one of the preceding claims, in which step b) is preceded by at least one reference scale being arranged on one of the bodies (1, 2, 6, 7) or adjacently to the bodies (1, 2, 6, 7) that appears in the image captured in step b), wherein step c) involves the dimensions of the bodies (1, 2, 6, 7) and the respective positions of the bodies (1, 2, 6, 7) relative to one another being determined by a comparison of dimensions in the image with the reference scale appearing in the image.

5. Method according to one of Claims 1 to 3, in which step b) involves the image capture means (16) being used to capture at least two reference points on the bodies (1, 2, 6, 7) from a prescribed physical position, a solid angle measurement means of the data goggles (12) measuring respective angles between a reference line (24) and respective connecting lines that connect the respective reference points to the prescribed physical position, and the measured angles are used in step c) for determining the dimensions of the bodies (1, 2, 6, 7) and the respective positions of the bodies (1, 2, 6, 7) relative to one another.

6. Method according to one of the preceding claims, in which the image capture means (16) captures an image of at least one marking put on one of the bodies (1, 2, 6, 7) and this marking is taken as a basis for the data goggles (12) to access stored data.

7. Method according to one of the preceding claims, in which step a) involves the display means (18) being used to display positions at which the light emission apparatus (10) and the light sensing apparatus (11) need to be arranged.

8. Method according to one of the preceding claims, in which one or more images captured in step b) are taken as a basis for checking whether the light emission apparatus (10) and the light sensing apparatus (11) are arranged in a prescribed manner, with a result of this check being displayed in the display means (18).

9. Method according to one of the preceding claims, in which the display means (18) is used to display information about a location of the bodies (1, 2, 6, 7) and/or a direction indicator leading to the bodies (1, 2, 6, 7) .

10. Method according to one of the preceding claims, in which the display means (18) is used to display a flowchart of the method.

11. Orientation system for carrying out the method according to one of Claims 1 to 10 having at least one light emission apparatus (10) for emitting a light beam (14), at least one light sensing apparatus (11) that has a light-sensitive area (15), wherein an impingement position for a light beam (14) emitted by the light emission apparatus (10) on the light-sensitive area (15) is registrable, and at least one pair of data goggles (12) that is connectable to the light sensing apparatus (11) by means of a data transmission link and that has at least one data processing means (17), at least one image capture means (16) and at least one display means (18).

12. Orientation system according to Claim 11, in which the data goggles (12) further have at least one solid angle measurement means and/or at least one inclinometer and/or at least one interface (20) that can be used to set up a connection to a local area network and/or to the Internet and/or to a navigation system.

## Revendications

1. Procédé destiné à amener deux corps (1, 2, 6, 7) dans des positions prédéterminées l'un par rapport à l'autre, comprenant les étapes suivantes :
a) disposer d'une manière prédéterminée au moins un dispositif émetteur de lumière (10) d'un système d'alignement sur l'un des corps (1, 2, 6, 7) et au moins un dispositif détecteur de lumière (11) du système d'alignement sur l'un des corps (1, 2, 6, 7) ;
b) acquérir au moins une image des corps (1, 2, 6, 7) à l'aide d'un moyen d'acquisition d'images (16) de lunettes connectées (12) du système d'alignement ;
c) déterminer des dimensions des corps (1, 2, 6, 7) et des positions respectives des corps (1, 2, 6, 7) les uns par rapport aux autres à partir de l'image acquise ou de plusieurs des images acquises à l'aide d'un moyen de traitement de données (17) des lunettes connectées (12) ;
d) enregistrer des positions d'incidence d'un faisceau lumineux (14) émis par ledit dispositif émetteur de lumière (10) sur une surface photosensible (15) du dispositif détecteur de lumière (11) ;
e) transmettre des données de mesure représentant les positions d'incidence enregistrées aux lunettes connectées (12) ;
f) traiter les données de mesure à l'aide du moyen de traitement de données (17) en tenant compte des dimensions des corps (1, 2, 6, 7), des positions respectives des corps (1, 2, 6, 7) les uns par rapport aux autres et des positions d'incidence enregistrées selon l'étape d), dans lequel on génère au moins une valeur d'ajustement indiquant comment les positions des corps (1, 2, 6, 7) doivent être modifiées les unes par rapport aux autres afin d'atteindre les positions prédéterminées ;
g) afficher la valeur d'ajustement sur un moyen d'affichage (18) des lunettes connectées (12) ;
h) modifier la position des corps (1, 2, 6, 7) en fonction de la valeur d'ajustement.

2. Procédé selon la revendication 1, dans lequel les corps (1, 2, 6, 7) sont des parties de machine (2, 7) montées tournantes de deux machines (1, 6) ayant des axes de rotation respectifs (3, 8), et dans lequel les parties de machine (2, 7) sont amenées les unes par rapport aux autres dans des positions prédéterminées dans lesquelles les axes de rotation (3, 8) sont alignés les uns avec les autres, dans lequel les parties de machine (2, 7) sont mises en rotation de manière synchrone et le faisceau lumineux (14) est incident sur la surface photosensible (15) au moins pendant une partie de la rotation.

3. Procédé selon la revendication 1, dans lequel les corps (1, 2, 6, 7) sont des machines (1, 6), et dans lequel au moins les étapes d) à g) sont exécutées pendant un fonctionnement des machines (1, 6).

4. Procédé selon l'une des revendications précédentes, dans lequel, avant l'étape b), au moins une échelle de référence est disposée de manière adjacente à l'un des corps (1, 2, 6, 7) ou aux corps (1, 2, 6, 7) et apparaît dans l'image acquise à l'étape b), dans lequel, à l'étape c), les dimensions des corps (1, 2, 6, 7) et les positions respectives des corps (1, 2, 6, 7) les uns par rapport aux autres sont déterminées par une comparaison de dimensions dans l'image avec l'échelle de référence apparaissant dans l'image.

5. Procédé selon l'une des revendications 1 à 3, dans lequel, à l'étape b), au moins deux points de référence sont détectés sur les corps (1, 2, 6, 7) à partir d'une position spatiale prédéterminée à l'aide du moyen d'acquisition d'images (16), des angles respectifs entre une ligne de référence (24) et des lignes de liaison respectives sont mesurés à l'aide d'un moyen de mesure d'angle solide des lunettes connectées (12), lesquelles lignes relient les points de référence respectifs à la position spatiale prédéterminée, et les angles mesurés sont utilisés à l'étape c) pour déterminer les dimensions des corps (1, 2, 6, 7) et les positions respectives des corps (1, 2, 6, 7) les uns par rapport aux autres.

6. Procédé selon l'une des revendications précédentes, dans lequel une image d'au moins un marquage appliqué sur l'un des corps (1, 2, 6, 7) est acquise par le moyen d'acquisition d'images (16) et un accès est effectué par les lunettes connectées (12) à des données stockées sur la base dudit marquage.

7. Procédé selon l'une des revendications précédentes, dans lequel, à l'étape a), des positions auxquelles le dispositif émetteur de lumière (10) et le dispositif détecteur de lumière (11) doivent être placés sont indiquées sur le moyen d'affichage (18).

8. Procédé selon l'une des revendications précédentes, dans lequel, sur la base d'une ou de plusieurs images acquises à l'étape b), il est vérifié si le dispositif émetteur de lumière (10) et le dispositif détecteur de lumière (11) sont disposés d'une manière prédéterminée, dans lequel un résultat de ladite vérification est affiché sur le moyen d'affichage (18).

9. Procédé selon l'une des revendications précédentes, dans lequel des informations concernant un emplacement des corps (1, 2, 6, 7) et/ou une indication de direction menant aux corps (1, 2, 6, 7) sont affichées sur le moyen d'affichage (18).

10. Procédé selon l'une des revendications précédentes, dans lequel un organigramme du procédé est affiché sur le moyen d'affichage (18).

11. Système d'alignement destiné à mettre en œuvre le procédé selon l'une des revendications 1 à 10, comprenant au moins un dispositif émetteur de lumière (10) destiné à émettre un faisceau lumineux (14), au moins un dispositif détecteur de lumière (11) ayant une surface photosensible (15), dans lequel une position d'incidence d'un faisceau lumineux (14) émis par le dispositif émetteur de lumière (10) sur la surface photosensible (15) peut être enregistrée, et au moins une paire de lunettes connectées (12), qui peuvent être reliées au dispositif détecteur de lumière (11) au moyen d'une liaison de transmission de données et qui comportent au moins un moyen de traitement de données (17), au moins un moyen de détection d'image (16) et au moins un moyen d'affichage (18).

12. Système d'alignement selon la revendication 11, dans lequel les lunettes connectées (12) comprennent en outre au moins un moyen de mesure d'angle solide et/ou au moins un inclinomètre et/ou au moins une interface (20), par le biais de laquelle il est possible d'établir une liaison à un réseau local et/ou à l'Internet et/ou à un système de navigation.
